# EUROPEAN PATENT SPECIFICATION

(11) **EP 3 725 591 B1**
(45) Date of publication and mention of the grant of the patent: **05.07.2023**
(21) Application number: 18888861.4
(22) Date of filing: 12.12.2018
(51) Int. Cl.: B60Q 3/80, B60Q 3/74

(54) **CONTROL METHOD AND CONTROL SYSTEM FOR VEHICLE ATMOSPHERE LAMPS**
STEUERVERFAHREN UND STEUERSYSTEM FÜR FAHRZEUGAMBIENTELAMPEN
PROCÉDÉ DE COMMANDE ET SYSTÈME DE COMMANDE POUR ÉCLAIRAGE D'AMBIANCE DE VÉHICULE

(30) Priority: 15.12.2017 CN 201711354995; 14.03.2018 CN 201810208790
(43) Date of publication of application: 21.10.2020
(73) Proprietor: NIO (Anhui) Holding Co., Ltd., Hefei City, Anhui Province (CN)
(72) Inventor: GONG, Haining, Shanghai 201804 (CN); LI, Tianshu, Shanghai 201804 (CN); YU, Bin, Shanghai 201804 (CN); JIN, Bei, Shanghai 201804 (CN); CHEN, Bing, Shanghai 201804 (CN); WANG, Jingjie, Shanghai 201804 (CN); FAN, Xin, Shanghai 201804 (CN)
(74) Representative: Patentwerk B.V.
(86) International application number: PCT/CN2018/120430
(87) International publication number: WO 2019/114716

(56) References cited:
- WO-A1-2017/071972
- CN-A- 103 997 836
- CN-A- 104 999 957
- CN-A- 108 528 329
- CN-U- 203 410 397
- CN-U- 203 410 397
- CN-U- 204 090 233
- CN-U- 206 442 569
- DE-A1-102006 030 300
- DE-A1-102012 214 204
- DE-A1-102013 219 597
- JP-A- 2004 322 858
- US-A1- 2005 111 231

## Description

### Technical Field

The invention relates to the technical field of vehicles, and in particular to a control method and system for vehicle atmosphere lamps.

### Background Art

With the continuous improvement of people's living standards, vehicles have gradually become an indispensable part of people's daily life. At the same time, with the rapid development of the vehicle industry, users begin to place higher and higher requirements for the comprehensive performance of vehicles. Specifically, vehicle atmosphere lamps can provide more comfortable light conditions for users, thus effectively reducing the fatigue of a driver and passengers, and further improving the driving safety to a certain extent on the basis of effectively improving the user experience.

Further, atmosphere lamps in most of existing vehicles often only have a single operating mode; alternatively, atmosphere lamps in a small number of vehicles have multiple operating modes, but the operating mode of the atmosphere lamps does not change with a change in driving conditions. In other words, if a user wants to change the operating mode of the atmosphere lamps during the driving of the vehicle, it must be manually adjusted, which results in a sharp decrease in user experience.

DE 10 2006 030300 A1 discloses a vehicle interior lighting with a plurality of atmosphere lamps, wherein the colour of the atmosphere lamps can be modified according to different operating modes. US patent application US20050111231A1 discloses a light controller capable of varying the brightness of a light emitting diode in a linear manner. The light controller may control a number of lights in a predetermined pattern or in a pattern designed by the user.

China patent application CN203410397U discloses that the automobile air conditioner is connected with the automobile atmosphere lamp control device through the CAN bus and sends temperature information inside and outside the automobile to the automobile atmosphere lamp control device; the digital power amplifier is connected with the automobile atmosphere lamp control device through the CAN bus and sends sound amplitude information in the automobile to the automobile atmosphere lamp control device.

International patent application WO2017071972A1 discloses a motor vehicle comprising a central light control device, a plurality of peripheral light control devices distributed within the vehicle, and a plurality of interior light modules, each of which comprises a plurality of light sources and is associated with a peripheral light control device.

German patent application DE102012214204A1 discloses that the vehicle lighting is determined based on the received information and the received setting instruction for the vehicle lighting.

German patent application DE102013219597A1 discloses a device for controlling vehicle interior lighting is proposed, with detection means designed to detect a dynamic vehicle state and a control unit designed to control the vehicle interior lighting as a function of a detected dynamic vehicle state, a vehicle comprising such a device and a working method for it.

These applications only teach that adjusting the color of the interior or ambient lighting through a variety of functional information, and they fail to teach the technical means to control the states of the vehicle's ambient lights based on the electric quantity of the vehicle.

Accordingly, there is a need in the art for a novel control method and system for vehicle atmosphere lamps to solve the foregoing problems.

### Summary of the Invention

In order to solve the above-mentioned problems in the prior art, that is, to solve the problem that a sharp decrease in user experience is caused because atmosphere lamps in existing vehicles do not change with the change in driving conditions, the invention provides a control method for vehicle atmosphere lamps with the features of claim 1, wherein the control method comprises the steps of: acquiring driving information of a vehicle; and selecting an operating mode for the vehicle atmosphere lamps according to the driving information of the vehicle, and wherein before, during or after the step of "acquiring driving information of a vehicle", the control method further comprises the steo of acquiring an electric quantity of the vehicle, and then turning or keeping off the vehicle atmosphere lamps if the electric quantity of the vehicle is less than a predetermined electric quantity.

In the technical solution of the control method for vehicle atmosphere lamps above, the step of "acquiring driving information of a vehicle" specifically comprises: acquiring a driving account of the vehicle; and the step of "selecting an operating mode for the vehicle atmosphere lamps according to the driving information of the vehicle" specifically comprises: selecting an operating mode for the vehicle atmosphere lamps according to the driving account of the vehicle.

In the technical solution of the control method for vehicle atmosphere lamps above, the step of "acquiring driving information of a vehicle" further comprises: "acquiring a driving account of the vehicle", and then acquiring a driving mode of the vehicle; and the step of "selecting an operating mode for the vehicle atmosphere lamps according to the driving information of the vehicle" further comprises: selecting an operating mode for the vehicle atmosphere lamps according to the driving account of the vehicle and the driving mode of the vehicle.

In the technical solution of the control method for vehicle atmosphere lamps above, the step of "acquiring driving information of a vehicle" specifically comprises: acquiring a driving mode of the vehicle; and the step of "selecting an operating mode for the vehicle atmosphere lamps according to the driving information of the vehicle" specifically comprises: selecting an operating mode for the vehicle atmosphere lamps according to the driving mode of the vehicle.

In the technical solution of the control method for vehicle atmosphere lamps above, after the step of of "selecting an operating mode for the vehicle atmosphere lamps according to the driving information of the vehicle", the control method further comprises: setting the operating mode of the vehicle atmosphere lamps.

In the technical solution of the control method for vehicle atmosphere lamps above, the step of "setting the operating mode of the vehicle atmosphere lamps by means of a control terminal" specifically comprises: after the step of "selecting an operating mode for the vehicle atmosphere lamps according to the driving information of the vehicle", the control method further comprises: operating the vehicle atmosphere lamps in the selected operating mode.

In the technical solution of the control method for vehicle atmosphere lamps above, before, during or after the step of "acquiring driving information of a vehicle", the control method further comprises: acquiring an ambient brightness; and after the step of "selecting an operating mode for the vehicle atmosphere lamps according to the driving information of the vehicle" adjusting the brightness of the vehicle atmosphere lamps according to the ambient brightness.

In the technical solution of the control method for vehicle atmosphere lamps above, before, during or after the step of "acquiring driving information of a vehicle", the control method further comprises: acquiring a speech instruction and/or an operation instruction from a control terminal; and after the step of "selecting an operating mode for the vehicle atmosphere lamps according to the driving information of the vehicle" switching the operating mode of the vehicle atmosphere lamps according to the speech instruction and/or the operation instruction from the control terminal.

In the technical solution of the control method for vehicle atmosphere lamps above, parameters in the operating mode of the vehicle atmosphere lamps comprise a color parameter and/or a brightness parameter and/or a change frequency parameter.

In the technical solution of the control method for vehicle atmosphere lamps above, the control terminal is an in-vehicle control terminal and/or a mobile control terminal.

In the technical solution of the control method for vehicle atmosphere lamps above, the in-vehicle control terminal is an onboard console screen, and/or the mobile control terminal is a mobile phone.

The invention further provides a control system for vehicle atmosphere lamps, the control system comprising a vehicle atmosphere lamp controller which is configured to control vehicle atmosphere lamps and to carry out the control method for vehicle atmosphere lamps as described in any one of the technical solutions above.

It can be understood by those skilled in the art that in the technical solutions of the invention, different users have different preferences for the operating mode of the vehicle atmosphere lamps, while the same user also has different requirements for the operating mode of the vehicle atmosphere lamps in different driving modes; the invention can make it possible to select different operating modes for the vehicle atmosphere lamps according to different users and different requirements of the same user in different driving modes, so that the operating mode of the vehicle atmosphere lamps can fit the user's preferences to the greatest extent at any time, thereby effectively improving the user experience.

### Brief Description of the Drawings

FIG. 1 is a flowchart of main steps of a control method for vehicle atmosphere lamps according to the invention;
FIG. 2 is a flowchart of steps of a first embodiment of a control method for vehicle atmosphere lamps according to the invention;
FIG. 3 is a flowchart of steps of a second embodiment of a control method for vehicle atmosphere lamps according to the invention;
FIG. 4 is a flowchart of steps of a third embodiment of a control method for vehicle atmosphere lamps according to the invention;
FIG. 5 is a flowchart of steps of a fourth embodiment of a control method for vehicle atmosphere lamps according to the invention;
FIG. 6 is a flowchart of steps of a fifth embodiment of a control method for vehicle atmosphere lamps according to the invention; and
FIG. 7 is a flowchart of steps of a control method for vehicle atmosphere lamps according to the invention.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention, which is defined by the appended claims. For example, although each step of the method of the invention is described in a specific order in this application, these orders are not to be regarded in a restrictive sense. Without departing from the basic principles of the invention, those skilled in the art may perform the steps in different orders.

In view of the problem put forward in the background art section that a sharp decrease in user experience is caused because atmosphere lamps in existing vehicles do not change with a change in driving conditions, the invention provides a control method for vehicle atmosphere lamps, which can make it possible to select an operating mode for the vehicle atmosphere lamps by acquiring driving information of a vehicle, so that the operating mode of the vehicle atmosphere lamps can fit different users' usage habits to a great extent, thereby effectively improving the user experience.

It can be understood that the vehicle atmosphere lamps refer to lamps capable of emitting light of various colors. These atmosphere lamps can be arranged at any position in the vehicle, or certainly, can be inherent lamps in the vehicle, which are preferably LED lamps or tricolor LED lamps, so as to effectively facilitate the control by the vehicle atmosphere lamp controller, while also effectively saving on costs.

It can be understood by those skilled in the art that the vehicle atmosphere lamp controller can be a control module in an inherent ECU (vehicle electronic control unit) of the vehicle, or can be a separately arranged vehicle atmosphere lamp controller, as long as the vehicle atmosphere lamp controller can carry out the control method for vehicle atmosphere lamps according to the invention. It should be noted that, preferably, the control terminal can be a mobile terminal and/or an HMI (vehicle human-machine interaction system) of the vehicle, i.e., a user can send operation instructions and input parameters by means of the mobile terminal and/or the HMI of the vehicle, and the vehicle atmosphere lamp controller can acquire the operation instructions and the input parameters sent by means of the mobile terminal and/or the HMI of the vehicle; preferably, the mobile terminal can be a mobile phone, a tablet computer or a notebook computer, etc. Certainly, the mobile terminal can also be other mobile devices, as long as the mobile device can send operation instructions and input parameters to the vehicle atmosphere lamp controller.

Further, when a control terminal used by a user is a mobile phone, the user can install an application program on the mobile phone, and then input an operation instruction through the application program; next, the mobile phone can send the operation instruction input by the user to the vehicle atmosphere lamp controller; at the same time, the vehicle atmosphere lamp controller can receive the operation instruction sent by the mobile phone and control an operating mode of the vehicle atmosphere lamps according to the operation instruction.

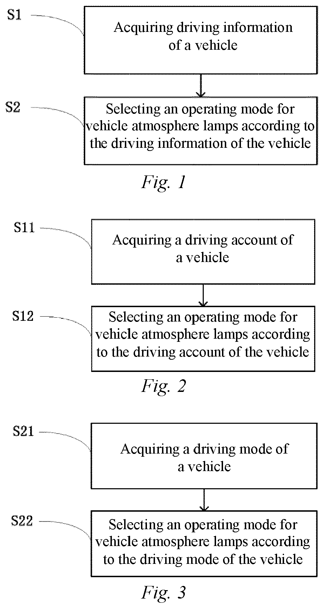

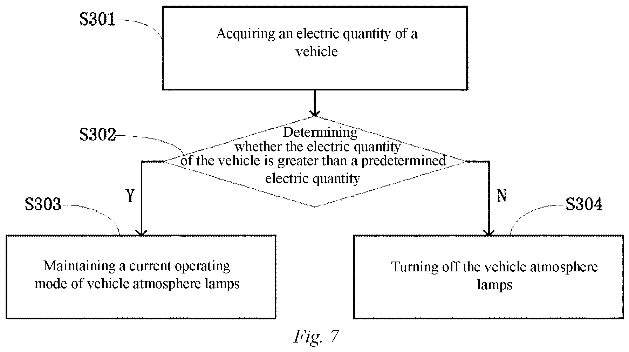

First of all, with reference to FIG. 1 and 7, these figures show flowcharts of main steps of a control method for vehicle atmosphere lamps according to the invention. Main steps of a control method for vehicle atmosphere lamps according to the invention are briefly described below with reference to FIG. 1. As shown in FIG. 1, the control method mainly comprises the following steps:
S1: acquiring driving information of a vehicle; and
S2: selecting an operating mode for the vehicle atmosphere lamps according to the driving information of the vehicle.

Further, after the user starts the vehicle, in step S1, the vehicle atmosphere lamp controller can acquire the driving information of the vehicle. It can be understood that there may be one or more kinds of driving information of the vehicle; specifically, the driving information may be driving account information, driving mode information, etc. Next, in step S2, the vehicle atmosphere lamp controller can select the operating mode for the vehicle atmosphere lamps according to the driving information of the vehicle, so that the operating mode of the vehicle atmosphere lamps can always fit users' usage habits, thereby effectively improving the user experience. In addition, it should be noted that after the selection of the operating mode for the vehicle atmosphere lamps, the vehicle atmosphere lamp controller can control the vehicle atmosphere lamps to operate in the selected operating mode.

Those skilled in the art can understand that the operating mode of the vehicle atmosphere lamps can be either the inherent operating mode of the vehicle or an operating mode customized by a user through the control terminal. Specifically, the operating mode of the vehicle atmosphere lamps comprises a plurality of parameters such as color, brightness and change frequency, and the user can set the parameters in the operating mode of the vehicle atmosphere lamps by means of the control terminal to generate a customized operating mode. The manner of customization can not only enrich the operating mode of the vehicle atmosphere lamps, but also can make the operating mode of the vehicle atmosphere lamps fully fit the user's preferences.

Next, with reference to FIG. 2, this figure shows a flowchart of steps of a first embodiment of a control method for vehicle atmosphere lamps according to the invention. The steps of the first embodiment of a control method for vehicle atmosphere lamps according to the invention are described below with reference to FIG. 2. As shown in FIG. 2, the control method mainly comprises the following steps:
S11: acquiring a driving account of a vehicle; and
S12: selecting an operating mode for the vehicle atmosphere lamps according to the driving account of the vehicle.

Further, In the first embodiment of the invention, after the user starts the vehicle, step S11 is performed, i.e., the vehicle atmosphere lamp controller can acquire a current driving account of the vehicle, thereby obtaining information of a current driver of the vehicle. It can be understood that the vehicle can be set with multiple driving accounts, and the vehicle atmosphere lamp controller can identify different drivers through the driving accounts; specifically, the vehicle atmosphere lamp controller can identify different drivers through different vehicle keys, or the driver can send, by means of the control terminal, an instruction for starting the driving account to the vehicle atmosphere lamp controller, so that the vehicle atmosphere lamp controller can accurately identify different drivers; and certainly, the vehicle atmosphere lamp controller can also identify the driver in other ways, i.e., technicians can set identification manners by himself/herself according to actual product requirements. Taking the vehicle atmosphere lamp controller identifying different driving accounts through vehicle keys as an example, it is assumed that a binding relationship has been established between a vehicle key and a certain driving account, and after a user starts the vehicle by using the vehicle key, the vehicle atmosphere lamp controller can identify, according to the vehicle key, the driving account bound to the vehicle key.

Furthermore, in step S12, the vehicle atmosphere lamp controller can select an operating mode for the vehicle atmosphere lamps according to the current driving account of the vehicle. It can be understood that since different users have different preferences for the operating mode of the vehicle atmosphere lamps, the user can set his/her favorite customized operating mode in his/her driving account by means of the control terminal. After acquiring the user's driving account, the vehicle atmosphere lamp controller can turn on the vehicle atmosphere lamps according to the operating mode stored in the driving account, so that the vehicle atmosphere lamp controller can identify different drivers according to the driving accounts and select an operating mode for the vehicle atmosphere lamps according to the preferences of different drivers. Those skilled in the art can understand that the user can set the operating mode of the vehicle atmosphere lamps by himself/herself by means of the control terminal, or directly select the inherent operating mode of the vehicle.

Next, with reference to FIG. 3, this figure shows a flowchart of steps of a second embodiment of a control method for vehicle atmosphere lamps according to the invention. The steps of the second embodiment of a control method for vehicle atmosphere lamps according to the invention are described below with reference to FIG. 3. As shown in FIG. 3, the control method mainly comprises the following steps:
S21: acquiring a driving mode of a vehicle; and
S22: selecting an operating mode for the vehicle atmosphere lamps according to the driving mode of the vehicle.

Further, In the second embodiment of the invention, after the user starts the vehicle, step S21 is performed, i.e., the vehicle atmosphere lamp controller can acquire a current driving mode of the vehicle, thereby obtaining a driving state of the vehicle. It can be understood that in some of the existing vehicles, the vehicles are set with multiple driving modes, such as a sport mode and a personalized mode; and in different driving modes, driving parameters such as acceleration performance and maximum speed of the vehicle are different. The vehicle atmosphere lamp controller can identify the driving state of the vehicle by means of the driving mode of the vehicle, and can also effectively determine the driving state of the driver to a certain extent.

Furthermore, in step S22, the vehicle atmosphere lamp controller can select an operating mode for the vehicle atmosphere lamps according to the current driving mode of the vehicle. It can be understood that since the same user certainly has different driving moods and driving states in different driving modes, and inevitably has different requirements for the operating mode of the vehicle atmosphere lamps, the user can set his/her favorite operating mode in different driving modes by means of a control terminal. After acquiring the driving mode, the vehicle atmosphere lamp controller can turn on the vehicle atmosphere lamps according to the operating mode stored by the user in the driving mode, so that the vehicle atmosphere lamp controller can identify the driving state of the driver according to the driving mode and select an operating mode for the vehicle atmosphere lamps according to the preferences of the driver in different driving modes. Those skilled in the art can understand that the user can set the operating mode of the vehicle atmosphere lamps by himself/herself by means of the control terminal, or directly select the inherent operating mode of the vehicle.

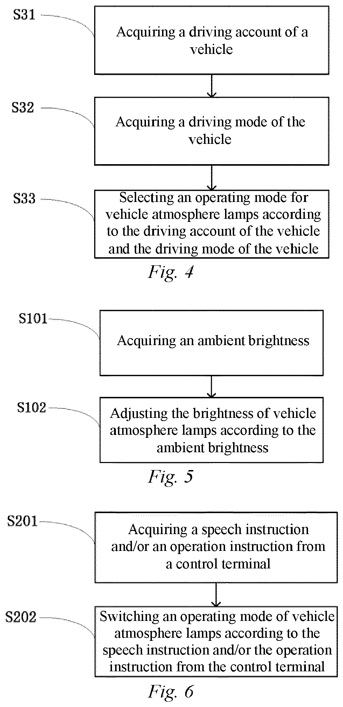

Next, with reference to FIG. 4, this figure shows a flowchart of steps of a third embodiment of a control method for vehicle atmosphere lamps according to the invention. The steps of the third embodiment of a control method for vehicle atmosphere lamps according to the invention are described below with reference to FIG. 4. As shown in FIG. 4, the control method mainly comprises the following steps:
S31: acquiring a driving account of a vehicle;
S32: acquiring a driving mode of the vehicle; and
S33: selecting an operating mode for the vehicle atmosphere lamps according to the driving account of the vehicle and the driving mode of the vehicle.

Further, In the third embodiment of the invention, after the user starts the vehicle, step S31 is performed, i.e., the vehicle atmosphere lamp controller can acquire a current driving account of the vehicle, thereby obtaining information of a current driver of the vehicle. It can be understood that since different users have different preferences for the operating mode of the vehicle atmosphere lamps, the vehicle atmosphere lamp controller can identify different drivers according to the driving accounts and select an operating mode for the vehicle atmosphere lamps according to the preferences of different drivers. Next, step S32 is performed, i.e., the vehicle atmosphere lamp controller can acquire a current driving mode of the vehicle, thereby obtaining a driving state of the vehicle. It can be understood that since the same user certainly has different driving moods and states in different driving modes, and inevitably has different requirements for the operating mode of the vehicle atmosphere lamps, the vehicle atmosphere lamp controller can identify the driving state of the driver according to the driving mode and select an operating mode for the vehicle atmosphere lamps according to the preferences of the driver in different driving modes.

Furthermore, in step S33, the vehicle atmosphere lamp controller can select an operating mode for the vehicle atmosphere lamps according to the current driving account and the current driving mode of the vehicle. Specifically, the user can set different operating modes in different driving modes in his/her own driving account by means of a control terminal; in other words, after the user starts the vehicle, the vehicle atmosphere lamp controller can identify the current driving account first, so as to achieve the purpose of identifying different drivers; and then the vehicle atmosphere lamp controller identifies the driving mode of the vehicle so as to acquire the operating modes of the vehicle atmosphere lamps favored by the current driver in different driving modes, so that the vehicle atmosphere lamp controller can select, according to the current driving account and the current driving mode of the vehicle, an operating mode for the vehicle atmosphere lamps which best fits the user's preferences. When the driving mode of the vehicle is switched, the operating mode of the vehicle atmosphere lamps can also be switched accordingly, so that the operating mode of the vehicle atmosphere lamps can fit the user's preferences to the greatest extent at any time, thereby effectively improving the user experience. It should be noted that the order of step S31 and step S32 can also be reversed according to actual needs.

Next, with reference to FIG. 5, this figure shows a flowchart of steps of a fourth embodiment of a control method for vehicle atmosphere lamps according to the invention. The steps of the fourth embodiment of a control method for vehicle atmosphere lamps according to the invention are described below with reference to FIG. 5. As shown in FIG. 5, the control method mainly comprises the following steps:
S101: acquiring an ambient brightness; and
S102: adjusting the brightness of the vehicle atmosphere lamps according to the ambient brightness.

Further, during the operating of the vehicle, step S101 is performed, i.e., the vehicle atmosphere lamp controller can acquire the ambient brightness in real time; and certainly, the vehicle atmosphere lamp controller can also acquire the ambient brightness once at predetermined intervals. It can be understood that technicians can arranged a light sensor on the vehicle, so that the vehicle atmosphere lamp controller can measure the ambient brightness by means of the light sensor; and certainly, the technicians can also measure the ambient brightness in other ways. Next, step S102 is performed, i.e., the vehicle atmosphere lamp controller can adjust the brightness of the vehicle atmosphere lamps according to the ambient brightness. It should be noted that the vehicle atmosphere lamp controller can determine the initial brightness of the vehicle atmosphere lamps in the manner described in the preceding three embodiments, and then adjust the brightness of the vehicle atmosphere lamps by means of this embodiment, so that the brightness of the vehicle atmosphere lamps can change with a change in the ambient brightness, thereby further effectively improving the user experience.

Next, with reference to FIG. 6, this figure shows a flowchart of steps of a fifth embodiment of a control method for vehicle atmosphere lamps according to the invention. The steps of the fifth embodiment of a control method for vehicle atmosphere lamps according to the invention are described below with reference to FIG. 6. As shown in FIG. 6, the control method mainly comprises the following steps:
S201: acquiring a speech instruction and/or an operation instruction from a control terminal; and
S202: switching the operating mode of the vehicle atmosphere lamps according to the speech instruction and/or the operation instruction from the control terminal.

Further, during the operating of the vehicle, step S201 is performed, i.e., the vehicle atmosphere lamp controller can acquire the speech instruction and/or the operation instruction from the control terminal in real time. It should be noted that the technicians can arrange a speech recognition apparatus inside the vehicle to acquire the speech instruction from the user in real time, and the vehicle atmosphere lamp controller can also acquire the speech instruction acquired by the speech recognition apparatus. In addition, the user can send an operation instruction to the vehicle atmosphere lamp controller by means of a control terminal, and the vehicle atmosphere lamp controller can acquire the operation instruction from the control terminal. Next, step S202 is performed, i.e., the vehicle atmosphere lamp controller can switch the operating mode of the vehicle atmosphere lamps according to the speech instruction and/or the operation instruction from the control terminal. It can be understood that when a user sends a speech instruction and/or an operation instruction to the vehicle atmosphere lamp controller, it indicates that the user does not like the current operating mode of the vehicle atmosphere lamps at this moment; in this case, the vehicle atmosphere lamp controller can switch the operating mode of the vehicle atmosphere lamps according to the instruction from the user, so that the operating mode of the vehicle atmosphere lamps can always fit the user's requirements, thereby improving the user experience to the greatest extent.

Next, with reference to FIG. 7, this figure shows a flowchart of steps of the control method for vehicle atmosphere lamps according to the invention. The steps of the control method for vehicle atmosphere lamps according to the invention are described below with reference to FIG. 7. As shown in FIG. 7, the control method mainly comprises the following steps:
S301: acquiring an electric quantity of a vehicle;
S302: determining whether the electric quantity of the vehicle is greater than a predetermined electric quantity; if so, performing step S303; and if not, performing step S304;
S303: maintaining a current operating mode of the vehicle atmosphere lamps; and
S304: turning or keeping off the vehicle atmosphere lamps.

Further, during the operating of the vehicle, step S301 is performed, i.e., the vehicle atmosphere lamp controller can acquire the electric quantity of the vehicle in real time so as to effectively determine whether the current electric quantity of the vehicle is still suitable for the use of the vehicle atmosphere lamps; and certainly, the vehicle atmosphere lamp controller can also acquire information of the electric quantity of the vehicle once at predetermined intervals. Next, step S302 is performed, i.e., the vehicle atmosphere lamp controller can determine whether the electric quantity of the vehicle is greater than the predetermined electric quantity; it can be understood that when the electric quantity of the vehicle is greater than the predetermined electric quantity, the use of the vehicle atmosphere lamps does not have any influence on the normal use of the vehicle; however, when the electric quantity of the vehicle is less than or equal to the predetermined electric quantity, the continued use of the vehicle atmosphere lamps is likely to affect the normal use of the vehicle. It should be noted that the predetermined electric quantity in this embodiment needs to be set by a person skilled in the art according to actual situations of the vehicle.

Furthermore, in step S302, if the electric quantity of the vehicle is greater than the predetermined electric quantity, it indicates that the user can continue to use the vehicle atmosphere lamps to improve the driving experience and riding experience of the user; in this case, step S303 is performed, i.e., the vehicle atmosphere lamp controller controls the vehicle atmosphere lamps to maintain the current operating mode. Besides, in step S303, if the electric quantity of the vehicle is less than or equal to the predetermined electric quantity, it indicates that the current electric quantity of the vehicle hardly maintains the normal use of the vehicle atmosphere lamps, and if the user insists on using the vehicle atmosphere lamps, it is very likely that a normal driving function of the vehicle is affected due to insufficient electric quantity of the vehicle; in this case, step S304 is performed, i.e., the vehicle atmosphere lamps are turned or kept off, so that the electric quantity of the vehicle can be sufficient for the driving function of the vehicle of the user, thereby effectively ensuring that the vehicle atmosphere lamps do not affect the normal driving of the vehicle.

Finally, it should be noted that the foregoing embodiments are all implementation solutions of the invention, and are not intended to limit the scope of protection of the invention. When using the invention in practice, those skilled in the art can appropriately add or delete some of the steps or change the order of different steps as needed. This change does not go beyond the basic principle of the invention, and falls within the scope of protection of the invention as defined by the appended claims.

Heretofore, the preferred implementation solutions of the invention have been described with reference to the accompanying drawings; however, those skilled in the art can readily understand that the scope of protection of the invention is obviously not limited to the particular embodiments.

## Claims

1. A control method for vehicle atmosphere lamps, **characterized by** comprising the steps of:
acquiring (S1) driving information of a vehicle; and
selecting (S2) an operating mode for the vehicle atmosphere lamps according to the driving information of the vehicle;
**characterised in that** before, during or after the step (S1) of "acquiring driving information of a vehicle", the control method further comprises:
acquiring (S301) an electric quantity of the vehicle; and
turning or keeping off (S304) the vehicle atmosphere lamps if the electric quantity of the vehicle is less than a predetermined electric quantity.

2. The control method for vehicle atmosphere lamps according to claim 1, **characterized in that** the step (S1) of "acquiring driving information of a vehicle" specifically comprises:
acquiring (S11) a driving account of the vehicle; and
the step (S2) of "selecting an operating mode for the vehicle atmosphere lamps according to the driving information of the vehicle" specifically comprises:
selecting (S12) an operating mode for the vehicle atmosphere lamps according to the driving account of the vehicle.

3. The control method for vehicle atmosphere lamps according to claim 2, **characterized in that** the step (S1) of "acquiring driving information of a vehicle" further comprises:
acquiring (S31) a driving account of the vehicle, and then acquiring (S32) a driving mode of the vehicle; and
the step (S2) of "selecting an operating mode for the vehicle atmosphere lamps according to the driving information of the vehicle" further comprises:
selecting (S33) an operating mode for the vehicle atmosphere lamps according to the driving account of the vehicle and the driving mode of the vehicle.

4. The control method for vehicle atmosphere lamps according to claim 1, **characterized in that** the step (S2) of "acquiring driving information of a vehicle" specifically comprises:
acquiring (S11) a driving mode of the vehicle; and
the step (S2) of "selecting an operating mode for the vehicle atmosphere lamps according to the driving information of the vehicle" specifically comprises:
selecting (S12) an operating mode for the vehicle atmosphere lamps according to the driving mode of the vehicle.

5. The control method for vehicle atmosphere lamps according to any one of claims 1 to 4, **characterized in that** after the step (S2) of "selecting an operating mode for the vehicle atmosphere lamps according to the driving information of the vehicle" the control method further comprises:
setting the operating mode of the vehicle atmosphere lamps.

6. The control method for vehicle atmosphere lamps according to any one of claims 1 to 4, **characterized in that** after the step (S2) of "selecting an operating mode for the vehicle atmosphere lamps according to the driving information of the vehicle", the control method further comprises:
operating the vehicle atmosphere lamps in the selected operating mode.

7. The control method for vehicle atmosphere lamps according to any one of claims 1 to 4, **characterized in that** before, during or after the step (S1) of "acquiring driving information of a vehicle", the control method further comprises:
acquiring (S101) an ambient brightness; and after the step (S2) of "selecting an operating mode for the vehicle atmosphere lamps according to the driving information of the vehicle"
adjusting the brightness of the vehicle atmosphere lamps according to the ambient brightness.

8. The control method for vehicle atmosphere lamps according to any one of claims 1 to 4, **characterized in that** before, during or after the step (S1) of "acquiring driving information of a vehicle", the control method further comprises:
acquiring (S201) a speech instruction and/or an operation instruction from a control terminal; and after the step (S2) of "selecting an operating mode for the vehicle atmosphere lamps according to the driving information of the vehicle"
switching (S202) the operating mode of the vehicle atmosphere lamps according to the speech instruction and/or the operation instruction from the control terminal.

9. The control method for vehicle atmosphere lamps according to any one of claims 1 to 4, **characterized in that** parameters in the operating mode of the vehicle atmosphere lamps comprise a color parameter and/or a brightness parameter and/or a change frequency parameter.

10. The control method for vehicle atmosphere lamps according to claim 8, **characterized in that** the control terminal is an in-vehicle control terminal and/or a mobile control terminal.

11. The control method for vehicle atmosphere lamps according to claim 10, **characterized in that** the in-vehicle control terminal is an onboard console screen, and/or the mobile control terminal is a mobile phone.

12. A control system for vehicle atmosphere lamps, **characterized by** comprising a vehicle atmosphere lamp controller, which is configured to control vehicle atmosphere lamps and to carry out the control method for vehicle atmosphere lamps according to any one of claims 1 to 11.

## Patentansprüche

1. Steuerverfahren für Fahrzeugatmosphärenlampen, **dadurch gekennzeichnet, dass** es die folgenden Schritte umfasst:
Erhalten (S1) von Fahrinformationen eines Fahrzeugs; und
Auswählen (S2) eines Betriebsmodus für die Fahrzeugatmosphärenlampen gemäß den Fahrinformationen des Fahrzeugs;
**dadurch gekennzeichnet, dass** vor, während oder nach dem Schritt (S1) zum "Erhalten von Fahrinformationen eines Fahrzeugs", das Steuerverfahren ferner Folgendes umfasst:
Erhalten (S301) einer elektrischen Größe des Fahrzeugs; und
Ausschalten oder Beibehalten eines ausgeschalteten Zustands (S304) der Fahrzeugatmosphärenlampen, wenn die elektrische Größe des Fahrzeugs kleiner als eine vorbestimmte elektrische Größe ist.

2. Steuerverfahren für Fahrzeugatmosphärenlampen nach Anspruch 1, **dadurch gekennzeichnet, dass** der Schritt (S1) zum "Erhalten von Fahrinformationen eines Fahrzeugs" insbesondere Folgendes umfasst:
Erhalten (S11) eines Fahrkontos des Fahrzeugs; und
wobei der Schritt (S2) zum "Auswählen eines Betriebsmodus für die Fahrzeugatmosphärenlampen gemäß den Fahrinformationen des Fahrzeugs" insbesondere Folgendes umfasst:
Auswählen (S12) eines Betriebsmodus für die Fahrzeugatmosphärenlampen gemäß dem Fahrkonto des Fahrzeugs.

3. Steuerverfahren für Fahrzeugatmosphärenlampen nach Anspruch 2, **dadurch gekennzeichnet, dass** der Schritt (S1) zum "Erhalten von Fahrinformationen eines Fahrzeugs" ferner Folgendes umfasst:
Erhalten (S31) eines Fahrkontos des Fahrzeugs, und dann Erhalten (S32) eines Fahrmodus des Fahrzeugs; und
wobei der Schritt (S2) zum "Auswählen eines Betriebsmodus für die Fahrzeugatmosphärenlampen gemäß den Fahrinformationen des Fahrzeugs" ferner Folgendes umfasst:
Auswählen (S33) eines Betriebsmodus für die Fahrzeugatmosphärenlampen gemäß dem Fahrkonto des Fahrzeugs und dem Fahrmodus des Fahrzeugs.

4. Steuerverfahren für Fahrzeugatmosphärenlampen nach Anspruch 1, **dadurch gekennzeichnet, dass** der Schritt (S2) zum "Erhalten von Fahrinformationen eines Fahrzeugs" insbesondere Folgendes umfasst:
Erhalten (S11) eines Fahrmodus des Fahrzeugs; und
wobei der Schritt (S2) zum "Auswählen eines Betriebsmodus für die Fahrzeugatmosphärenlampen gemäß den Fahrinformationen des Fahrzeugs" insbesondere Folgendes umfasst:
Auswählen (S12) eines Betriebsmodus für die Fahrzeugatmosphärenlampen gemäß dem Fahrmodus des Fahrzeugs.

5. Steuerverfahren für Fahrzeugatmosphärenlampen nach einem der Ansprüche 1 bis 4, **dadurch gekennzeichnet, dass** nach dem Schritt (S2) zum "Auswählen eines Betriebsmodus für die Fahrzeugatmosphärenlampen gemäß den Fahrinformationen des Fahrzeugs" das Steuerverfahren ferner Folgendes umfasst:
Einstellen des Betriebsmodus der Fahrzeugatmosphärenlampen.

6. Steuerverfahren für Fahrzeugatmosphärenlampen nach einem der Ansprüche 1 bis 4, **dadurch gekennzeichnet, dass** nach dem Schritt (S2) zum "Auswählen eines Betriebsmodus für die Fahrzeugatmosphärenlampen gemäß den Fahrinformationen des Fahrzeugs" das Steuerverfahren ferner Folgendes umfasst:
Betreiben der Fahrzeugatmosphärenlampen in dem ausgewählten Betriebsmodus.

7. Steuerverfahren für Fahrzeugatmosphärenlampen nach einem der Ansprüche 1 bis 4, **dadurch gekennzeichnet, dass** vor, während oder nach dem Schritt (S1) zum "Erhalten von Fahrinformationen eines Fahrzeugs" das Steuerverfahren ferner Folgendes umfasst:
Erhalten (S101) einer Umgebungshelligkeit; und nach dem Schritt (S2) zum "Auswählen eines Betriebsmodus für die Fahrzeugatmosphärenlampen gemäß den Fahrinformationen des Fahrzeugs"
Anpassen der Helligkeit der Fahrzeugatmosphärenlampen gemäß der Umgebungshelligkeit.

8. Steuerverfahren für Fahrzeugatmosphärenlampen nach einem der Ansprüche 1 bis 4, **dadurch gekennzeichnet, dass** vor, während oder nach dem Schritt (S1) zum "Erhalten von Fahrinformationen eines Fahrzeugs" das Steuerverfahren ferner Folgendes umfasst:
Erhalten (S201) einer Sprachanweisung und/oder einer Betriebsanweisung von einem Steuerendgerät; und nach dem Schritt (S2) zum "Auswählen eines Betriebsmodus für die Fahrzeugatmosphärenlampen gemäß den Fahrinformationen des Fahrzeugs"
Umschalten (S202) des Betriebsmodus der Fahrzeugatmosphärenlampen gemäß der Sprachanweisung und/oder der Betriebsanweisung von dem Steuerendgerät.

9. Steuerverfahren für Fahrzeugatmosphärenlampen nach einem der Ansprüche 1 bis 4, **dadurch gekennzeichnet, dass** Parameter in dem Betriebsmodus der Fahrzeugatmosphärenlampen einen Farbparameter und/oder einen Helligkeitsparameter und/oder einen Änderungsfrequenzparameter umfassen.

10. Steuerverfahren für Fahrzeugatmosphärenlampen nach Anspruch 8, **dadurch gekennzeichnet, dass** das Steuerendgerät ein fahrzeuginternes Steuerendgerät und/oder ein mobiles Steuerendgerät ist.

11. Steuerverfahren für Fahrzeugatmosphärenlampen nach Anspruch 10, **dadurch gekennzeichnet, dass** das fahrzeuginterne Steuerendgerät ein Bordkonsolenbildschirm ist und/oder das mobile Steuerendgerät ein Mobiltelefon ist.

12. Steuersystem für Fahrzeugatmosphärenlampen, **dadurch gekennzeichnet, dass** es eine Fahrzeugatmosphärenlampensteuerung umfasst, die dazu ausgelegt ist, Fahrzeugatmosphärenlampen zu steuern und das Steuerverfahren für Fahrzeugatmosphärenlampen nach einem der Ansprüche 1 bis 11 auszuführen.

## Revendications

1. Procédé de commande pour éclairages d'ambiance de véhicule, **caractérisé en ce qu'**il comprend les étapes de :
l'acquisition (S1) d'informations de conduite d'un véhicule ; et
la sélection (S2) d'un mode de fonctionnement pour les éclairages d'ambiance de véhicule selon les informations de conduite du véhicule ;
**caractérisé en ce que**, avant, durant ou après l'étape (S1) de « l'acquisition d'informations de conduite d'un véhicule », le procédé de commande comprend en outre :
l'acquisition (S301) d'une quantité électrique du véhicule ; et
l'extinction ou le maintien éteints (S304) des éclairages d'ambiance de véhicule si la quantité électrique du véhicule est inférieure à une quantité électrique prédéterminée.

2. Procédé de commande pour éclairages d'ambiance de véhicule selon la revendication 1, **caractérisé en ce que** l'étape (S1) de « l'acquisition d'informations de conduite d'un véhicule » comprend spécifiquement :
l'acquisition (S11) d'un compte de conduite du véhicule ; et
l'étape (S2) de « la sélection d'un mode de fonctionnement pour les éclairages d'ambiance de véhicule selon les informations de conduite du véhicule » comprend spécifiquement :
la sélection (S12) d'un mode de fonctionnement pour les éclairages d'ambiance de véhicule selon le compte de conduite du véhicule.

3. Procédé de commande pour éclairages d'ambiance de véhicule selon la revendication 2, **caractérisé en ce que** l'étape (S1) de « l'acquisition d'informations de conduite d'un véhicule » comprend en outre :
l'acquisition (S31) d'un compte de conduite du véhicule, et puis l'acquisition (S32) d'un mode de conduite du véhicule ; et
l'étape (S2) de « la sélection d'un mode de fonctionnement pour les éclairages d'ambiance de véhicule selon les informations de conduite du véhicule » comprend en outre :
la sélection (S33) d'un mode de fonctionnement pour les éclairages d'ambiance de véhicule selon le compte de conduite du véhicule et le mode de conduite du véhicule.

4. Procédé de commande pour éclairages d'ambiance de véhicule selon la revendication 1, **caractérisé en ce que** l'étape (S2) de « l'acquisition d'informations de conduite d'un véhicule » comprend spécifiquement :
l'acquisition (S11) d'un mode de conduite du véhicule ; et
l'étape (S2) de « la sélection d'un mode de fonctionnement pour les éclairages d'ambiance de véhicule selon les informations de conduite du véhicule » comprend spécifiquement :
la sélection (S12) d'un mode de fonctionnement pour les éclairages d'ambiance de véhicule selon le mode de conduite du véhicule.

5. Procédé de commande pour éclairages d'ambiance de véhicule selon l'une quelconque des revendications 1 à 4, **caractérisé en ce que**, après l'étape (S2) de « la sélection d'un mode de fonctionnement pour les éclairages d'ambiance de véhicule selon les informations de conduite du véhicule », le procédé de commande comprend en outre :
le réglage du mode de fonctionnement des éclairages d'ambiance de véhicule.

6. Procédé de commande pour éclairages d'ambiance de véhicule selon l'une quelconque des revendications 1 à 4, **caractérisé en ce que**, après l'étape (S2) de « la sélection d'un mode de fonctionnement pour les éclairages d'ambiance de véhicule selon les informations de conduite du véhicule », le procédé de commande comprend en outre :
la mise en fonctionnement des éclairages d'ambiance de véhicule dans le mode de fonctionnement sélectionné.

7. Procédé de commande pour éclairages d'ambiance de véhicule selon l'une quelconque des revendications 1 à 4, **caractérisé en ce que**, avant, durant ou après l'étape (S1) de « l'acquisition d'informations de conduite d'un véhicule », le procédé de commande comprend en outre :
l'acquisition (S101) d'une luminosité ambiante ; et, après l'étape (S2) de « la sélection d'un mode de fonctionnement pour les éclairages d'ambiance de véhicule selon les informations de conduite du véhicule », l'ajustement de la luminosité des éclairages d'ambiance de véhicule selon la luminosité ambiante.

8. Procédé de commande pour éclairages d'ambiance de véhicule selon l'une quelconque des revendications 1 à 4, **caractérisé en ce que**, avant, durant ou après l'étape (S1) de « l'acquisition d'informations de conduite d'un véhicule », le procédé de commande comprend en outre :
l'acquisition (S201) d'une instruction vocale et/ou d'une instruction de fonctionnement provenant d'un terminal de commande ; et, après l'étape (S2) de « la sélection d'un mode de fonctionnement pour les éclairages d'ambiance de véhicule selon les informations de conduite du véhicule », la commutation (S202) du mode de fonctionnement des éclairages d'ambiance de véhicule selon l'instruction vocale et/ou l'instruction de fonctionnement provenant du terminal de commande.

9. Procédé de commande pour éclairages d'ambiance de véhicule selon l'une quelconque des revendications 1 à 4, **caractérisé en ce que** des paramètres dans le mode de fonctionnement des éclairages d'ambiance de véhicule comprennent un paramètre de couleur et/ou un paramètre de luminosité et/ou un paramètre de fréquence de changement.

10. Procédé de commande pour éclairages d'ambiance de véhicule selon la revendication 8, **caractérisé en ce que** le terminal de commande est un terminal de commande embarqué sur véhicule et/ou un terminal de commande mobile.

11. Procédé de commande pour éclairages d'ambiance de véhicule selon la revendication 10, **caractérisé en ce que** le terminal de commande embarqué sur véhicule est un écran de console de bord, et/ou le mobile terminal de commande est un téléphone mobile.

12. Système de commande pour éclairages d'ambiance de véhicule, **caractérisé en ce qu'**il comprend une unité de commande d'éclairages d'ambiance de véhicule, qui est configurée pour commander des éclairages d'ambiance de véhicule et pour réaliser le procédé de commande pour éclairages d'ambiance de véhicule selon l'une quelconque des revendications 1 à 11.
